(19) Europäisches Patentamt
European Patent Office
Office européen des brevets

(11) Veröffentlichungsnummer: **0 193 768**
**B1**

(12) # EUROPÄISCHE PATENTSCHRIFT

(45) Veröffentlichungstag der Patentschrifft: **07.02.90**

(51) Int. Cl.[5]: **H 01 M 10/39**

(21) Anmeldenummer: **86101949.5**

(22) Anmeldetag: **15.02.86**

(54) **Elektrochemische Speicherzelle.**

(30) Priorität: **05.03.85 DE 3507697**

(43) Veröffentlichungstag der Anmeldung:
**10.09.86 Patentblatt 86/37**

(45) Bekanntmachung des Hinweises auf die Patenterteilung:
**07.02.90 Patentblatt 90/06**

(84) Bennante Vertragsstaaten:
**BE DE FR GB IT NL**

(56) Entgegenhaltungen:
**EP-A-0 161 079**
**FR-A-2 332 624**
**FR-A-2 339 966**
**FR-A-2 488 053**
**US-A-4 002 807**

**PROC. - POWER SOURCES SYMP., 1978, Seiten 7-11; A. TOPOUZIAN: "The sodium-sulfur battery - A progress report"**

**JOURNAL OF POWER SOURCES, Band 17, Nr. 1-3, Januar/April 1986, Seiten 221-225; J.E. BATTLES et al.: "Post-test analyses of sodium-sulphur cells and aqueous batteries"**

(73) Patentinhaber: **Asea Brown Boveri Aktiengesellschaft**
**Kallstadter Strasse 1**
**D-6800 Mannheim-Käfertal (DE)**

(72) Erfinder: **Mennicke, Stefan, Dr.Dipl.-Chem.**
**Türkisweg 27**
**D-6906 Leimen 2 (DE)**
Erfinder: **Reiss, Karl**
**Panoramastrasse 6**
**D-6909 Mühlhausen-Rettigheim (DE)**

(74) Vertreter: **Rupprecht, Klaus, Dipl.-Ing.**
**c/o Asea Brown Boveri Aktiengesellschaft**
**Zentralbereich Patente Postfach 100351**
**D-6800 Mannheim 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 193 768 B1

LIBERGRAF, STOCKHOLM 1990

**Beschreibung**

Die Erfindung bezieht sich auf eine elektrochemische Speicherzelle gemäß dem Oberbegriff des Patentanspruches 1.

Solche elektrochemischen Speicherzellen eignen sich sehr gut als Energiequellen. Sie finden in vermehrtem Maße ihre Anwendung beim Aufbau von Speicherbatterien, die zur Stromversorgung von Elektrofahrzeugen vorgesehen sind.

Ein spezielles Beispiel für diese Speicherzellen sind solche, die auf der Basis von Natrium und Schwefel arbeiten, wiederaufladbar sind, und einen Festelektrolyten aus Betaaluminiumoxid besitzen, der den Anodenraum vom Kathodenraum trennt. Ein Vorteil dieser Speicherzellen besteht darin, daß beim Laden keine elektrochemische Nebenreaktionen ablaufen. Der Grund dafür ist, daß nur Natriumionen durch den Festelektrolyten gelangen können. Die Stromausbeute solcher Natrium/Schwefel-Speicherzellen liegt daher bei 100 %. Bei diesen elektrochemischen Speicherzellen ist das Verhältnis von Energieinhalt zum Gesamtgewicht der Speicherzelle im Vergleich zu Bleiakkumulatoren sehr hoch, da die Reaktionsstoffe leicht sind, und bei den elektrochemischen Reaktionen viel Energie frei wird.

Innerhalb des Kathodenraums befindet sich die Schwefelelektrode, die durch ein faserförmiges Material aus Kohlenstoff oder Grafit gebildet wird, und mit Schwefel getränkt ist. Von Nachteil ist bei diesen Speicherzellen mit einer solchen Schwefelelektrode, daß sie nur eine mäßige Wiederaufladbarkeit besitzen, da sich beim Aufladen der Speicherzellen flüssiger Schwefel bildet, der sich am Festelektrolyten ausscheidet und aufgrund seiner Nichtleitfähigkeit die weitere Aufladung der Speicherzelle blockiert.

Aus der DE-PS-2 649 660 ist eine Speicherzelle auf der Basis von Natrium und Schwefel bekannt, bei der durch eine bevorzugt durch Natriumpolysulfid benetzbare Schicht, die im Bereich des Festelektrolyten angeordnet ist, das Blockieren der Elektrode verhindert wird. Die Wirksamkeit der Schicht hängt von ihrer Oberflächenbeschaffenheit ab. Diese wird durch eine Vorbehandlung bewirkt, welche die Schicht erfährt, bevor sie in dem Kathodenraum angeordnet wird. Die Wirksamkeit einer solchen Schicht wird jedoch mit zunehmendem Alter der Speicherzelle gemindert. Insbesondere wird die Wirkung der Schicht durch die Absorbtion von Verunreinigungen aus der Natrium-Polysulfid-Schmelze, beispielsweise von Korrosionsprodukten und Oxidationsprodukten, wie sie mit fortschreitendem Alter in der Speicherzelle entstehen, beinträchtigt. Oberflächenreaktionen mit dem Natrium-Polysulfid und die Segregation von Verunreinigungen aus dem Festelektrolyten mindern die Oberflächenwirksamkeit einer solchen Schicht zusätzlich. Bei anderen Speicherzellen wird die Wiederaufladbarkeit dadurch verbessert, daß in den Kathodenraum zusätzlich Werkstoffe eingefüllt werden, welche die Eigenschaften des Schwefels in positiver Weise beeinflussen. Nachteile sind jedoch auch hier festzustellen. So zeigen beispielsweise Speicherzellen, in deren Kathodenraum Tetracyanoethylen eingefüllt ist, mit zunehmendem Alter, insbesondere wenn diese beginnen undicht zu werden, einen raschen Kapazitätsabfall. Ein weiterer Nachteil solcher Zusätze besteht darin, daß sie meist giftig und zudem teuer sind. Sie verursachen Schwierigkeiten bei der Aufarbeitung ausgefallener Speicherzellen, da sie sich nicht ohne weiteres vom Natrium-Polysulfid trennen lassen. Zudem wird bei einzelnen Zusätzen, insbesondere bei Arsenfluorid und Tetracyanoethylen eine korrosionsfördernde Wirkung innerhalb der Speicherzelle beobachtet.

Aus der FR-A-2 332 624 ist eine elektrochemische Speicherzelle auf der Basis von Natrium und Schwefel bekannt. Diese ist becherförmig ausgebildet. Der Anodenraum der Speicherzelle wird durch einen becherförmigen Festelektrolyten vom Kathodenraum getrennt. Um die Außenflächen des Festelektrolyten ist ein Gitter aus Metall angeordnet. Dieses kann aus Chrom gefertigt sein. Das Gitter ist über einen Widerstand an den negativen Pol einer Spannungsquelle angeschlossen. Das metallische Gehäuse der Speicherzelle kann zur Wiederaufladung derselben an den positiven Pol der Spannungsquelle angeschlossen werden. Durch den Kontakt des Metallgitters mit dem Schwefel kommt es zur Ausbildung einer metallischen Sulfidschicht auf dem Gitter.

Aus der FR-A-2 339 966 ist eine elektrochemische Speicherzelle bekannt, die ebenfalls becherförmig ausgebildet ist. Gegenstand dieser Druckschrift ist die Ausbildung einer im Kathodenraum angeordneten Elektrode, die aus einem definierten Werkstoff hergestellt ist, der eine definierte Porosität aufweist. Für die Beschichtung der Elektrode wird bspw. mit Chromoxid dotiertes Nickeloxid bzw. Lanthanchromat oder mit Calzium dotiertes Lanthandchromat.

Der Erfindung liegt die Aufgabe zugrunde eine elektrochemische Speicherzelle zu schaffen, in deren Kathodenraum eine Schwefelelektrode angeordnet ist, deren Wiederaufladbarkeit von den thermodynamischen Eingeschaften der Volumenphase eines Hilfswerkstoffes gefördert wird.

Diese Aufgabe wird erfindungsgemäß durch die Merkmale des Patentanspruches 1 gelöst.

Das im Kathodenraum angeordnete Natriumthiochromat-III ist in Wasser, Ethanol und flüssigen Polysulfiden bei der Betriebstemperatur der Natrium/Schwefel-Speicherzelle weitgehend unlöslich. Hierdurch ist es möglich, den Hilfswerkstoff gezielt dort anzuordnen, wo die elektrochemischen Reaktionsgeschwindigkeiten im Kathodenraum am größten sind. Dies ist insbesondere an den Grenzflächen zwischen der Schwefelelektrode und dem Festelektrolyten der Fall. Wenn es die Gegebenheiten fordern, kann das Natriumthiochromat-III auch auf die gesamte Oberfläche der Schwefelelektrode aufgetragen werden. Dies geschieht durch Aufstreuen des

pulverförmig ausgebildeten Hilfswerkstoffes. Dieser kann auch durch Aufdampfen, Sputtern, CVD-Verfahren oder durch Synthese auf das faserförmige, elektronenleitenden Material aufgetragen werden, welches die Schwefelelektrode bildet.

Weitere erfindungswesentliche Merkmale sind in den Unteransprüchen gekennzeichnet.

Die Erfindung wird nachfolgend anhand einer Zeichnung erläutert.

In der einzigen Figur ist eine elektrochemische Speicherzelle 1 dargestellt, die auf der Basis von Natrium und Schwefel arbeitet. Die Speicherzelle 1 wird nach außen hin durch ein metallisches Gehäuse 2 begrenzt, das becherförmig ausgebildet ist. Auf den Innenflächen des Gehäuses 2 ist eine korrosionsbeständige Schicht (hier nicht dargestellt) aufgetragen, die das Gehäuse vor den aggressiven Werkstoffen und deren Reaktionsprodukten schützt. Innerhalb des Gehäuses 2 ist ein ebenfalls becherförmig ausgebildeter Festelektrolyt 3 angeordnet, der aus Betaaluminiumoxid gefertigt ist. Der Innenraum des Festelektrolyten 3 dient als Anodenraum 4. Die Abmessungen des Festelektrolyten 3 sind so gewählt, daß zwischen seinen Außenflächen und den Innenflächen des metallischen Gehäuses 2 ein zusammenhängender Zwischenraum 5 verbleibt, der als Kathodenraum dient. Innerhalb des Kathodenraums ist die Schwefelelektrode 6 angeordnet. Diese wird durch ein faserförmiges Material auf der Basis von Kohlenstoff oder Grafit gebildet. Das faserförmige Material ist mit Schwefel getränkt. Bei der erfindungsgemäßen Speicherzelle 1 ist auf die Oberfläche dieses faserförmigen Materials, insbesondere auf die Oberfläche der Schwefelelektrode 6, die dem Festelektrolyten 3 zugewandt ist und direkt an diesen bündig angrenzt, ein Hilfswerkstoff 7 aufgetragen. Dieser weist die Eigenschaft auf, daß er die Wiederaufladbarkeit der Speicherzelle begünstigt. Bei der dargestellten Ausführungsform der Speicherzelle 1 ist dieser Hilfswerkstoff 7 nur im Grenzbereich zum Festelektrolyten 3 auf die Schwefelelektrode 6 aufgebracht. In diesem Grenzbereich laufen die chemischen Reaktionen mit der größten Geschwindigkeit ab, so daß gerade hier die Bildung von flüssigem Schwefel bei der Wiederaufladung der Speicherzelle in jedem Fall unterbunden werden muß. Gegebenenfalls kann es sinnvoll sein, diesen Hilfswerkstoff 7 auf die gesamte Oberfläche der Schwefelelektrode 6 aufzutragen. Der erfindungsgemäße Hilfswerkstoff 7 wird durch Natriumthiochromat-III ($NaCrS_2$) gebildet. Eine andere chemische Verbindung, welche die obengenannte Zusammensetzung aufweist, kann selbstverständlich auch als Hilfswerkstoff 7 verwendet werden, wenn sie die Wiederaufladbarkeit der Speicherzelle mindestens in der gleichen bemerkenswerten Weise verbessert und keine nachteiligen Nebenwirkungen zeigt. Der erfindungsgemäße Hilfswerkstoff 7 wird als Pulver hergestellt und auf die Oberfläche des faserförmigen die Schwefelelektrode 6 bildenden Materials aufgestreut. Es besteht ferner die Möglichkeit den Hilfswerkstoff 7 durch Aufdampfen, Sputtern oder durch ein CVD-Verfahren bzw. durch Synthese auf das faserförmige, elektronenleitende Material der Schwefelelektrode 6 aufzubringen. Der Hilfswerkstoff 7 in Form des erfindungsgemäße Natriumthiochromats-III wird durch Zusammenschmelzen von Chrom, Natriumcarbonat und Schwefel bei 700°C gebildet. Das Material wird anschließend bei 400°C im Vakuum getrocknet. Die Wirkung des erfindungsgemäßen Hilfswerkstoffs 7 wird nachfolgend erläuteret. Während des Betriebs der Speicherzelle 1, bei einer Temperatur um 350°C, wird das Natriumthiochromat beim Ladevorgang der Speicherzelle 1 in Natrium-Sulfid und Chromsulfid zersetzt. Beim Entladen der Speicherzelle 1 läuft die umgekehrte Reaktion ab, d. h. es wird wieder Natriumthiochromat gebildet. Die beim Laden und Entladen der Speicherzelle 1 ablaufenden chemischen Reaktionen sind anhand der nachfolgenden Gleichung dargestellt.

$$2\,NaCrS_2 \leftrightarrow Na_2S + Cr_2S_3$$

Der Ablauf der chemischen Reaktionen wird durch den Ladezustand der Speicherzelle 1 gesteuert, da dieser die Natriumsulfidaktivität in der Polysulfidlösung bestimmt. Um die Aufladung der Speicherzelle 1 sicherzustellen, ist es nicht nötig, größere Mengen an Natriumthiochromat-III zu zersetzen. Vielmehr genügt die Zersetzung von geringen Mengen des Hilfswerkstoffs 7 an den Stellen, an denen die $Na_2S_x$-Phase unterbrochen ist, und deshalb hier eine geringere $Na_2S$-Aktivität und ein relativ hohes Potential vorhanden sind, um wieder eine $Na_2S_x$-Phase zu schaffen, und so den Stromfluß zu ermöglichen. Beim Entladen der Speicherzelle 1 reagiert das beim Aufladen gebildete Chromsulfid ($Cr_2S_3$) vollständig mit Polysulfid zu $NaCrS_2$. Erfindungsgemäß besteht die Möglichkeit die ternären Natriumsulfide durch Dotieren in ihrer elektronischen und ionischen Leitfähigkeit zu beeinflussen und dadurch die Funktion der Schwefelelektrode 6, insbesondere die Wiederaufladbarkeit der Speicherzelle 1 zu verbessern.

**Patentansprüche**

1. Elektrochemische Speicherzelle auf der Basis von Natrium und Schwefel mit einem Anodenraum (4) und einem Kathodenraum (5), die durch einen Festelektrolyten (3) voneinander getrennt und wenigstens bereichsweise von einem metallischen Gehäuse begrenzt sind, wobei innerhalb des Kathodenraums (5) ein faserförmiges, mit Schwefel getränktes Material zur Bildung der Schwefelelektrode (6) angeordnet ist, *dadurch gekennzeichnet,* daß im Kathodenraum (5) wenigstens im Grenzbereich zwischen dem Festelektrolyten (3) und der Schwefelelektrode (6) Natriumthiochromat-III auf die gesamte Oberfläche der Schwefelelektrode (6) aufgetragen ist.

2. Speicherzelle nach Anspruch 1, *dadurch gekennzeichnet*, daß das Natriumthiochromat-III pulverförmig ausgebildet und mindestens auf die direkt an den Festelektrolyten (3) angrenzende Oberfläche der Schwefelelektrode aufgestreut ist.

3. Speicherzelle nach Anspruch 1, *dadurch gekennzeichnet*, daß das Natriumthiochromat-III durch Aufdampfen, Sputtern oder ein CVD-Verfahren oder durch Synthese auf das faserförmige, elektronenleitende Material der Schwefelelektrode (6) aufgetragen ist.

**Claims**

1. Electrochemical storage cell based on sodium and sulphur, having an anode space (4) and a cathode space (5) which are separated from one another by a solid electrolyte (3) and are delimited at least over a certain area by a metallic housing, a fibrous material impregnated with sulphur being arranged within the cathode space (5) for the purpose of forming the sulphur electrode (6), characterized in that sodium thiochromate(III) is applied to the entire surface of the sulphur electrode (6) in the cathode space (5), at least in the region of the interface between the solid electrolyte (3) and the sulphur electrode (6).

2. Storage cell according to Claim 1, characterized in that the sodium thiochromate(III) is in pulverulent form and is sprinkled at least onto the sulphur-electrode surface directly adjoining the solid electrolyte (3).

3. Storage cell according to Claim 1, characterized in that the sodium thiochromate(III) is applied to the fibrous, electron-conducting material of the sulphur electrode (6) by vapour deposition, sputtering or a CVD process or by synthesis.

**Revendications**

1. Elément accumulateur électrochimique à base de sodium et de soufre, comprenant un compartiment anode (4) et un compartiment cathode (5) qui sont séparés l'un de l'autre par un électrolyte solide (4) et, par zones au moins, sont délimités par une enveloppe métallique, un matériau fibreux imprégnés de soufre étant disposé dans le compartiment cathode (5) pour constituer l'électrode de soufre, caractérisé par le fait qu'au moins dans la zone limite entre l'électrolyte solide (3) et l'électrode de soufre (6), du thio-III-chromate de sodium est déposé sur toute la surface de l'électrode de soufre (6).

2. Elément accumulateur selon revendication 1, caractérisé par le fait que le thio-III-chromate de sodium est sous forme pulvérulente et est répandu sur au moins la surface de l'électrode de soufre contiguë à l'éléctrolyte solide (3).

3. Elément accumulateur selon revendication 1, caractérisé par le fait que le thio-III-chromate de sodium est déposé sur le matériau fibreux conducteur électronique de l'électrode de soufre (6) par vaporisation, pulvérisation ou procédé CVD, ou par synthèse.

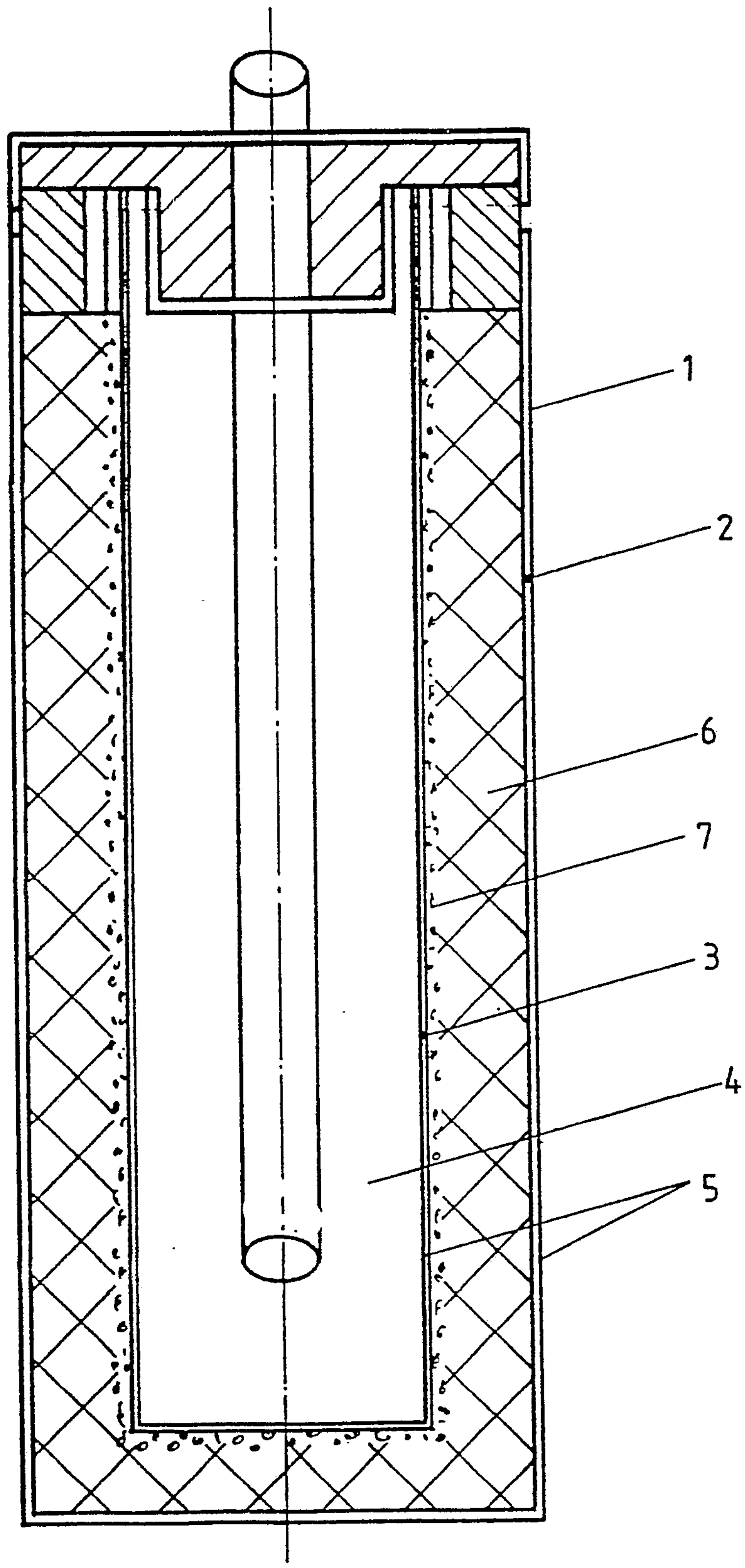
1
2
6
7
3
4
5